# EUROPEAN PATENT SPECIFICATION

(11) **EP 1 981 387 B1**
(45) Date of publication and mention of the grant of the patent: **26.10.2011**
(21) Application number: 07701142.7
(22) Date of filing: 25.01.2007
(51) Int. Cl.: A47L 9/24

(54) **VACUUM CLEANER DEVICE**
STAUBSAUGER
DISPOSITIF ASPIRATEUR

(30) Priority: 29.01.2006 SE 0600201
(43) Date of publication of application: 22.10.2008
(73) Proprietor: Olsson, Lennart F., 518 33 Sandared (SE); Loftander, Conny, 43441 Kungsbacka (SE)
(72) Inventor: Olsson, Lennart, 51833 Sandared (SE); Loftander, Conny, 43441 Kungsbacka (SE)
(74) Representative: Wallengren, Yngvar
(86) International application number: PCT/SE2007/000066
(87) International publication number: WO 2007/086798

(56) References cited:
- EP-A1- 0 875 195
- WO-A-01/97673
- GB-A- 2 386 054
- SE-A- 9 600 650
- SE-C- 104 383
- SE-C2- 518 135
- US-A- 3 306 634

## Description

### TECHNICAL FIELD

The present invention relates to a vacuum cleaner device which comprises a vacuum cleaner nozzle with a connection to one end of a vacuum cleaner pipe whose opposite end is connectable via a vacuum cleaner hose to a vacuum cleaner, the connection being pivotal and the vacuum cleaner pipe having inner and outer, mutually longitudinally displaccable parts and a joint with a hose.

### BACKGROUND ART

It is a known fact that, using a standard vacuum cleaner hose with a standard shaft, it is very difficult to get at and vacuum clean a distance in beneath low furniture. The most prevalent solution is that the vacuum cleaner pipe displays an angled connection to the vacuum cleaner nozzle and that this can be rotated so that the vacuum cleaner pipe can be laid parallel along the floor. When the vacuum cleaner pipe is parallel with the floor, the user of the vacuum cleaner must bend down to floor level in order to be able to steer the nozzle under furniture or the like, which is extremely fatiguing among other things for the back. If attempts are made to vacuum cleaner under an item of furniture as far as is possible without laying the vacuum cleaner pipe down, there is a very great risk of damaging the lower edge of the furniture when the upright vacuum cleaner pipe strikes the edge of the furniture. To vacuum cleaner up on the top level of a tall item of furniture from floor level using existing constructions of vacuum cleaner pipes is totally impossible. In order to manage this, a chair or ladder must be used so that the user of the vacuum cleaner can hold the vacuum cleaner pipe parallel with the upper surface of the furniture.

All of these drawbacks have been obviated by means of the present invention. By means of an elbow joint that can be bent through 180°, the user of the vacuum cleaner can, with the elbow joint in a position at about 90°, stand upright and at the same time, because of the axial lateral rigidity of the elbow joint, maintain full control over guiding the nozzle under a low item of furniture. The nozzle, with a gentle reciprocal movement, can be moved back and forth. When vacuum cleaning up on a cupboard, the nozzle can, thanks to the elbow joint, just as easily be moved back and forth in analogy with vacuum cleaning under furniture. In normal vacuum cleaning of floors, the extension tube and the elbow joint are telescopically retracted in the vacuum cleaner shaft so that a normal, completely rigid vacuum cleaner shaft is obtained. In the protracted position, there will be obtained a rigid, straight section which, by the intermediary of the elbow joint, is connected to the vacuum cleaner shaft. The protractible section together with the elbow joint has a length which as good as corresponds to the length of an existing vacuum cleaner shaft, which is sufficient for normal use. For special purposes, other lengths can naturally be manufactured. SE 9600650 A1 discloses a vacuum cleaner pipe having a first rigid pipe and a second rigid pipe connected together by means of a flexible hose. The first pipe has fixedly mounted thereon a first collar encircling the first pipe leaving an annular space therebetween. The second pipe has slidingly mounted thereon a second collar encircling the second pipe. At the end facing the first collar there is provided in the second collar an extension tube which, when sliding the second collar towards the first collar, is introducable between the first collar and the first tube thereby rigidly connecting the first and second tubes. The two rigid pipes are also connected to one another by means of telescoping devices connected at opposite ends by ball joints to the rigid pipes.

GB 2 386 054 A describes a pivotable joint assembly for a vacuum cleaner. This assembly comprises a joint body which can be removably installed between the extension pipe and the handle of a vacuum cleaner so that an air passage is created between the suction nozzle and the vacuum cleaner body. The joint body allows the extension pipe to pivot with respect to the handle. The joint body includes a first joint pipe having a first pivot portion at one end, while the other end is removably connected to the extension pipe. A second joint pipe having a second pivot portion formed at one end pivotally connected to the first pivot portion, while the other end is removably connected to the handle. Locking means may also be present to lock the pivoting movement of the first joint pipe and the second joint pipe at a predetermined angle.

The drawback inherent in these designs and constructions are that both pipe sections of the vacuum cleaner pipe are fixed in length and are not per se telescopic in relation to one another,

### PROBLEM STRUCTURE

The present invention has for its object to design the device described by way of introduction such that this obviates the drawbacks inherent in the prior art technology. In particular, the present invention has for its object to design the vacuum cleaner device so that it simplifies vacuum cleaning under low items of furniture and up on tall items of furniture.

### SOLUTION

The objects forming the basis of the present invention will be attained if the vacuum cleaner device described by way of introduction is **characterised in that** the joint is disposed on the inner section and is insertable in the outer section for locking of the joint.

### BRIEF DESCRIPTION OF THE ACCOMPANYING DRAWINGS

The present invention will now be described in greater detail hereinbelow, with reference to the accompanying Drawings. In the accompanying Drawings:

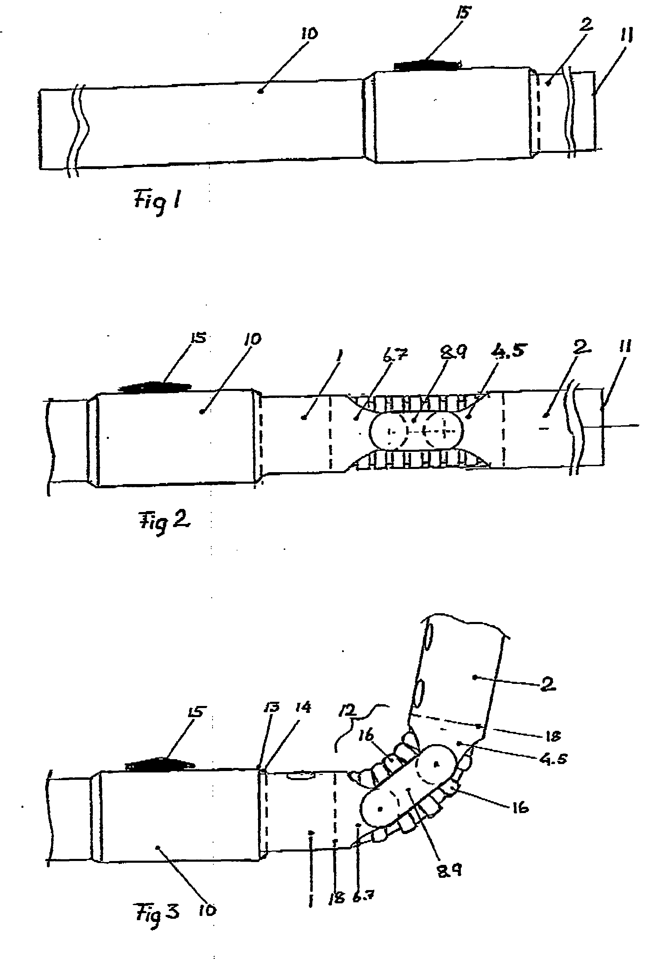

- Fig. 1: shows the device according to the present invention inserted in the vacuum cleaner shaft or pipe;
- Fig. 2: shows the device according to the present invention wholly withdrawn out of the vacuum cleaner shaft or pipe;
- Fig. 3: shows an elbow joint included in the device according to the present invention bent at approximately 80°;

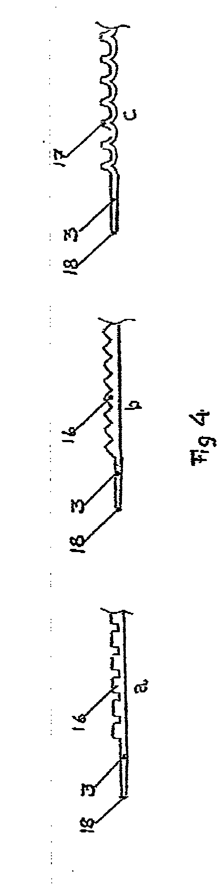

- Figs 4a,b,c: show a hose included in the joint with a number of different embodiments of rigidifying means which prevent the hose from being compressed;

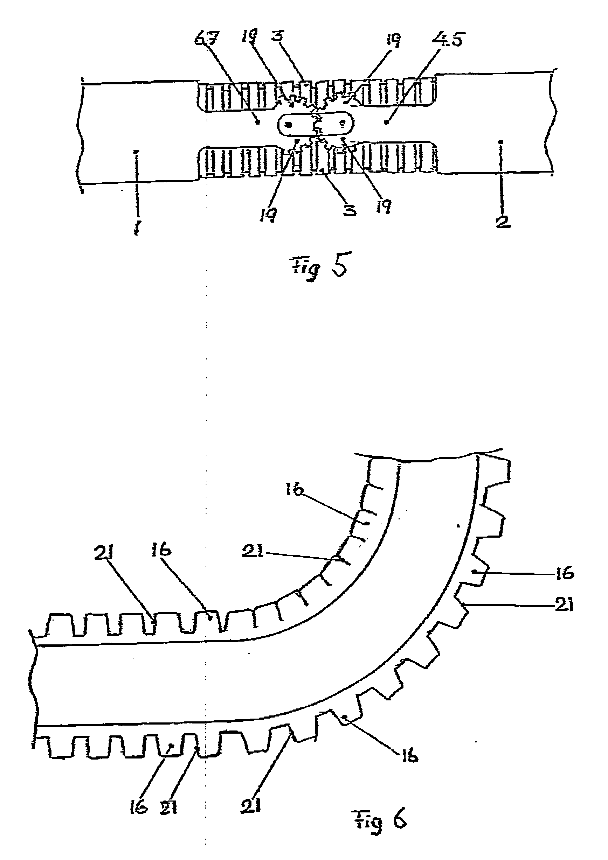

- Fig. **5**: shows anchorages with cogs included in the joint;
- Fig. **6**: shows a detail of the hose with the flanks of externally disposed annular rigidifying means, on the one hand on an unbent section of the hose and on the other at a bend of approx. 90°;

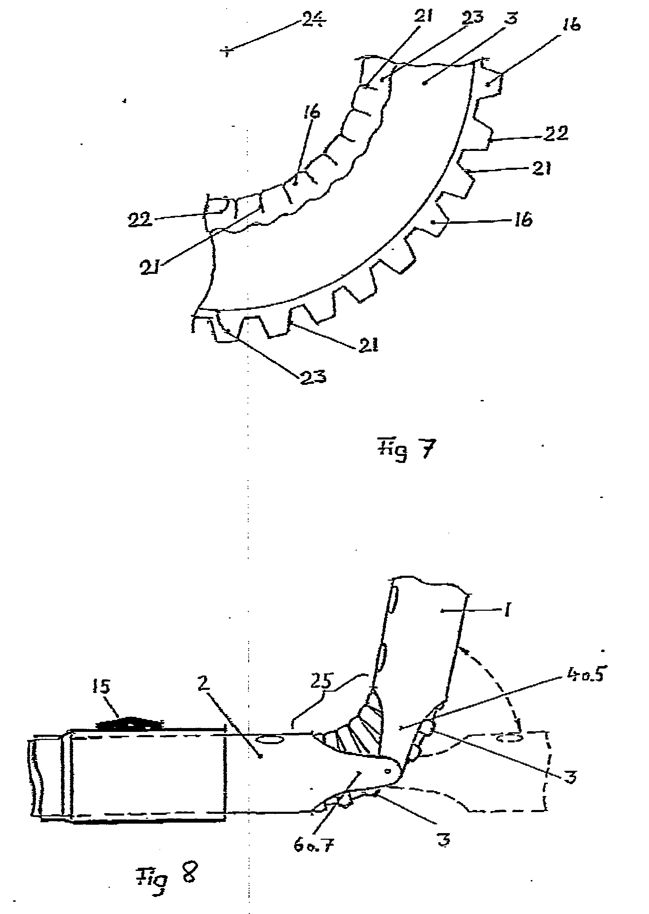

- Fig. **7**: shows a 90° blending of the hose where the inner side of the bend is compressed and the outer side is expanded; and
- Fig. **8**: shows a simplified variation where the anchorages in the joint are pivotally connected direct to the anchorages without interjacent linkages.

### DESCRIPTION OF PREFERRED EMBODIMENT

In its most generic form, the present invention is based on the concept that the vacuum cleaner device is to have two joints whose pivot axes are substantially parallel with one another and where the one joint is disposed on or in connection with a vacuum cleaner nozzle included in the vacuum cleaner device, while the other is to be disposed on a vacuum cleaner pipe whose upper end is, via a vacuum cleaner hose, connectable to a vacuum cleaner. As a result of this arrangement, the vacuum cleaner pipe can, on vacuum cleaning under a low item of furniture, be bent so that its lower section lies along the floor while its upper section connected to the vacuum cleaner hose extends up from the floor so that it may readily be operated by a standing user.

In order to permit vacuum cleaning in a conventional manner, the joint of vacuum cleaner pipe is lockable in the straight position. Further, it is rigid in all other directions than about its own pivot axis when it is "open".

The vacuum cleaner nozzle has a connection for cooperation with the lower end of the vacuum cleaner pipe and has a connection pipe for interconnection with the vacuum cleaner pipe or an anchorage 11 disposed thereon. The connection pipe is, unlike in the prior art technology, substantially straight and non-rotatably fixed about its longitudinal axis in the nozzle. On the other hand, it is pivotal within a sector of 75° to 90° from a position approximately parallel with floor on which the nozzle stands in normal working position, to an upright position.

According to the present invention, the vacuum cleaner pipe is, as was mentioned above, provided with a single elbow joint 25 or an elbow joint 12 with linkage arms 8 and 9, which permit the vacuum cleaner pipe to bend reciprocally through more than 180°, it being readily possible at a bending angle of about 90° to get at planar surfaces which are located low down or high up. The present invention may be designed in such a manner that the entire device including extension tube 2 together with elbow joint section 12 and the upper section 1 of the elbow joint can be inserted into an existing vacuum cleaner shaft 10, where the device according to the invention may be fixedly locked by a locking device 15 in the vacuum cleaner shaft 10 belonging to the existing vacuum cleaner. Hereby, the joint is locked in the straight position. Similarly, the device according to the present invention is prevented from being drawn out of the vacuum cleaner shaft 10 by the arrest means 13 and 14. The nozzle belonging to the vacuum cleaner shaft 10 can be mounted direct on the nozzle fitting 11 of the extension tube 2.

In one embodiment of the present invention, it consists of two tube sections 1 and 2 joined together with two linkage arms 8 and 9 which are pivotally secured in the anchorages 6 and 7 in the tubular upper section 1 of the elbow joint 12. The union of the joints is carried out by means of an element which may, for example, be a rivet, screw or the like. The linkage arms 8 and 9 are also pivotally connected to the anchorages 4 and 5 of the extension tube 2. A hose connection 3 goes from the extension tube 2 through the elbow joint section 12 to the tubular upper section 1 of the elbow joint 12. The hose connection 3 is fixed airtight to both of the tube sections 1 and 2, for example by gluing or that the hose 3 has been provided with one or more external annular ridges that fit into corresponding grooves on the inside of both of the tubes. By employing the linkage arms 8 and 9, the bending radius of the hose connection 3 will be increased, which contributes in reducing the risk of the hose connection 3 being folded over or creased.

The hose3 may further wholly or partly be removable for facilitating cleaned of the horse 3 when unsuitable foreign matter has accumulated and clogged the hose 3. The hose 3 may be removable in one or both of its ends.

In certain cases, it may bc advantageous always to have the bending centre of the elbow joint section 12 fixed so that it cannot be displaced towards either of the tube sections 1 and 2. This can be achieved in that both of the linkage arms 8 and 9 arc provided in both ends with cogs 1) which are constantly in mesh, on the one hand, in both anchorages 4 and 5 of the extension tube 2 and, on the other hand in both anchorages 6 and 7 of the tube section 1.

The tube sections 1 and 2 being united by means of the two linkage arms, the risk will be avoided that the hose 3 on bending will have too tight a radius which could cause the hose 3, in relation to the bending centre of the elbow joint section 12, to be radially compressed so that the through flow area will be constricted, with a risk of clogging which may entail a loss of section. In that the hose 3 is designed with annular, relatively close external rigidifying ridges 16, and also that the hose 3 is prevented by the two linkage arms 8 and 9 from expanding axially in relation to the bending centre of the elbow joint, the tendency for compression of the hose 3 will be further reduced, with the result that the flow resistance for the air current will be extremely slight.

The best results for a good through flow through the elbow joint section 12 arc attained when the hose 3 has a completely smooth inside surface and where the end edges 18 of the hose 3 form a gentle transition from the slightly larger diameter of the tube sections 1 and 2 to the slightly smaller diameter of the hose 3 so that turbulence is greatly reduced. The property of the material from which the hose 3 is manufactured is, in order to attain the desired bending properties of the hose 3, decisive for how the external rigidifying ridges 16 and their interjacent spaces must be designed. In a correctly balanced relationship between material properties and the size of the ridges 16 and their interspaces, an almost completely smooth inner surface will be obtained on bending of the hose 3. This implies then that clogging is eliminated. The width of and the interspaces between the external rigidifying ridges 16 is hence determined by the material from which the hose 3 is manufactured in order to obtain as gentle a curvature as possible with the smoothest possible inner surface. With the correctly adapted width of the external rigidifying homogeneous ridges 16 as well as the size of the interspaces, both in width and depth, and with optimum design of the ridges 16 and the flanks 21 of their interspaces, it is possible, at bending angles of more than 100°, to obtain an as good as completely smooth inner surface in the hose 3 at the same time as the bending centre 24 of the hose 3 is as good as always located closely approximating the ideal position. The flanks 21 can, for facilitating a bending of the hose 3, be designed in trapezoidal form where the upper region 22 of the ridge 16 is narrower than the base 23, which then results in the hose 3 more readily being able to be bent when the ridges, on that side of the hose bend which is located most proximal the bending centre 24 of the hose 3, are not exposed to as great a compression in the axial direction of the hose, since the flank upper portion 22 of the ridge 16 will have more room. At a bending of about 100°, depending on the rigidity and elasticity of the hose material, the upper portions 22 on the side which is most proximal the bending centre 24 of the hose 3 will meet at the same time as the interspaces of the ridges 16 are compressed together at the same time as, on that side of the hose 3 which is most distal from the bending centre 24 of the hose 3, the interspaces of the ridges 16 are greatly stretched out.

In certain contexts, on transport in the hose 3 of substances which could be aggressive, a material for the hose 3 must be selected which withstands this substance. This hose material may perhaps be so soft that it is incapable, despite the external rigidifying ridges 16 and their interspaces, of holding the bending centre of the hose 3 in the proximity of the ideal position. This ideal position can then be positively created in that the linkage arms 8 and 9 are provided in both of their ends with cogs 19 which are in constant mesh in the anchorages 4 and 5 of the extension tube 2 as well as in the anchorages 6 and 7 of the tube connection 1. The bending centre of the elbow joint 12 will then always lie in the centre point of the linkage arms 8 and 9.

On certain occasions, it may be necessary to use a hose 3 which is designed as a bellows 17 because of the fact that the hose 3 is exposed to aggressive substances and must then be manufactured from a material resistant to such a substance which is not ideal as regards rigidly and elasticity and cannot, therefore, be designed with the rigidifying ridges 16 and their interspaces. When such a hose 3 designed as a bellows 17 is used, the insides of the hose 3 will be greatly folded and creased and then display a much higher through-flow resistance with a consequential considerably greater risk of clogging 4.

For certain purposes, for example for a more economical variation where the requirement for gentle and symmetric bending of the hose 3 is not so critical, the linkage arms 8 and 9 can be dispensed with and the anchorages 4 and 5 be directly pivotally connected to the anchorages 6 and 7 by means of some known joining element, in which event a joint with a smaller bending radius will be obtained. This joint is also capable of bending a total of more than 180° and where a bending of the elbow joint section 25 on a bending about 90° in accordance with the previous description for joints with linkage arms 8 and 9, also this simplified embodiment provides the possibility of getting under low items of furniture without the shaft 10 of the vacuum cleaner needing to be laid down parallel with the floor or requiring the use of a chair or a ladder to gain access, for example to tall items of furniture. The possibility of being able to insert the upper section of the elbow joint 25 in an existing vacuum cleaner shaft remains uncharged.

## Claims

1. A vacuum cleaner device comprising a vacuum cleaner nozzle with a connection to one end of a vacuum cleaner pipe whose opposite end is connectable via a vacuum cleaner hose to a vacuum cleaner, the connection being pivotal and the vacuum cleaner pipe having an inner (1, 2) and an outer (10) section, which sections are mutually longitudinally displaceable in relation to one another, **characterised in that** the connection comprises a joint (23, 25) with a hose (3), wherein the joint (12, 25) is disposed on the inner section (1, 2) and is insertable in the outer section (10) for locking of the joint.

2. The vacuum cleaner device as claimed in Claim 1, **characterised in that** the pivot axes of the connection and the joint (12, 25) are substantially parallel with one another.

3. The vacuum cleaner device as claimed in Claim 1 or 2, **characterised in that** the connection includes a connection tube for interconnection with the vacuum cleaner pipe, the connection tube being substantially straight and non-rotatably secured about its longitudinal axis in the nozzle.

4. The vacuum cleaner device as claimed in Claim 1, **characterised in that** the outer section (10) is, via the vacuum cleaner hose, connectable to the vacuum cleaner and the inner section (2) has an anchorage (11) for cooperation with the connection to the vacuum cleaner nozzle.

5. The vacuum cleaner device as claimed in any of Claims 1 to 4, **characterised in that** the inner section includes an extension tube (2) and an upper tube section (1), the hose (3) being disposed to bridge across a distance between them.

6. The vacuum cleaner device as claimed in Claim 5, **characterised in that** the hose (3) has, on its inside, a smooth surface; and that the end edges (18) of the hose form a gentle transition from the slightly larger diameter of the inner tube section (1) to the slightly smaller diameter of the hose.

7. The vacuum cleaner device as claimed in any of Claims 5 and 6, **characterised in that** the extension tube (2) and the upper tube section (1) display anchorages (4, 5 and 6, 7, respectively) which are pivotally connected to one another.

8. The vacuum cleaner device as claimed in any of Claims 5 and 6, **characterised in that** the extension tube (2) and the upper tube section (1) display anchorages (4,5 and 6, 7, respectively) which are pivotally connected to one another via linkage arm sections (8 , 9).

9. The vacuum cleaner device as claimed in any of Claims 1 to 8, **characterised in that** the hose (3) is releasable.

## Patentansprüche

1. Staubsauger mit einer Staubsaugerdüse, welche eine Verbindung zu einem Ende eines Staubsaugerrohres aufweist, dessen gegenüberliegendes Ende über einen Staubsaugerschlauch mit einem Staubsauger verbunden werden kann, wobei die Verbindung drehbar ist und das Staubsaugerrohr einen inneren (1, 2) und einen äußerten (10) Abschnitt besitzt, die in Längsrichtung zueinander verschiebbar sind, **dadurch gekennzeichnet, dass** die Verbindung ein Verbindungsstück (23, 25) mit einem Schlauch (3) aufweist, wobei das Verbindungsstück (12, 25) an dem inneren. Abschnitt (1, 2) angeordnet ist, und in den äußeren Abschnitt (10) eingeschoben werden kann, um das Verbindungsstück zu verriegeln.

2. Staubsauger nach Anspruch 1, **dadurch gekennzeichnet, dass** die Drehachsen der Verbindung und des Verbindungsstückes (12, 25) im wesentlichen parallel zueinander verlaufen.

3. Staubsauger nach Anspruch 1 oder 2, **dadurch gekennzeichnet, dass** die Verbidung ein Verbindungsrohr für den Zusammenschluss mit dem Staubsaugerrohr aufweist, wobei das Verbindungsrohr im wesentlichen gerade ist und um seine Längsachse nicht drehbar in der Düse befestigt ist.

4. Staubsauger nach Anspruch 1., **dadurch gekennzeichnet, dass** der äußere Abschnitt (10) über den Staubsaugerschlauch mit dem Staubsauger verbunden werden kann, und der innere Abschnitt (2) eine Verankerung (11) zum Zusammenwirken mit dem Anschluss an die Staubsaugerdüse aufweist.

5. Staubsauger nach einem der Ansprüche 1 bis 4, **dadurch gekennzeichnet, dass** der innere Abschnitt ein Verlängerungsrohr (2) und einen oberen Rohrabschnitt (1) aufweist, wobei der Schlauch (3) derart angeordnet ist, um einen Abstand wischen ihnen zu überbrücken.

6. Staubsauger nach Anspruch 5, **dadurch gekennzeichnet, dass** der Schlauch (3) an seiner Innenseite eine glatte Oberfläche besitzt, und dass die Endkante (18) des Schlauches einen leichten Übergang von dem etwas größeren Durchmesser des inneren Rohrabschnittes (1) zu dem etwas kleineren Durchmesser des Schlauches bilden.

7. Staubsauger nach einem der Ansprüche 5 und 6, **dadurch gekenntzeichnet, dass** das Verlängerungsrohr (2) und der obere Rohrabschnitt (1) Verankerungen (4, 5 bzw. 6, 7) aufweisen, die drehbar miteinander verbunden sind.

8. Staubsauger nach einem der Ansprüche 5 und 6, **dadurch gekennzeichnet, dass** das Verlängerungsrohr (2) und der obere Rohrabschnitt (1) Verankerungen (4, 5 bzw. 6, 7) aufweisen, die über Verbindungsarmabschnitte (8, 9) drehbar miteinander verbunden sind.

9. Staubsauger nach einem der Absprüche 1 bis 8, **dadurch gekennzeichnet, dass** der Schlauch (3) lösbar ist.

## Revendications

1. Dispositif formant aspirateur comprenant une buse d'aspiration avec un raccord à une première extrémité d'une tuyauterie d'aspirateur dont l'extrémité opposée peut être raccordée par l'intermédiaire d'un tuyau d'aspirateur à un aspirateur, le raccord pouvant pivoter et la tuyauterie d'aspirateur comportant des sections interne (1, 2) et externe (10), lesquelles sections pouvant être déplacées mutuellement longitudinalement l'une par rapport à l'autre, **caractérisé en ce que** le raccord comprend un joint d'articulation (23, 25) avec un tuyau (3), dans lequel le joint d'articulation (12, 25) est disposé sur la section interne (1, 2) et peut être inséré dans la section externe (10) afin d'assurer le verrouillage du joint d'articulation.

2. Dispositif formant aspirateur selon la revendication 1, **caractérisé en ce que** les axes de pivot du raccord et du joint d'articulation (12, 25) sont sensiblement parallèles l'un à l'autre

3. Dispositif formant aspirateur selon la revendication 1 ou 2, **caractérisé en ce que** le raccord comporte un tube de raccordement afin d'assurer l'interconnexion avec la tuyauterie d'aspirateur, le tube de raccordement étant sensiblement rectiligne et fixe sans possibilité de rotation par rapport à son axe longitudinal sur la buse.

4. Dispositif formant aspirateur selon la revendication 1, **caractérisé en ce que** la section externe (10) peut, par l'intermédiaire du tuyau d'aspirateur, être raccordée à l'aspirateur et la section interne (2) comporte un ancrage (11) afin de coopérer avec le raccord sur la buse d'aspiration.

5. Dispositif formant aspirateur selon l'une quelconque des revendications 1 à 4, **caractérisé en ce que** la section interne comporte un tube d'extension (2) et une section supérieure de tube (1), le tuyau (3) étant disposé de manière à les relier sur la distance les séparant.

6. Dispositif formant aspirateur selon la revendication 5, **caractérisé en ce que** le tuyau (3) présente, sur sa face interne, une surface lisse ; et **en ce que** les bords d'extrémité (18) du tuyau forment une transition douce à partir du diamètre légèrement plus grand de la section de tube interne (1) jusqu'au diamètre légèrement plus faible du tuyau.

7. Dispositif formant aspirateur selon l'une quelconque des revendications 5 et 6, **caractérisé en ce que** le tube d'extension (2) et la section de tube supérieure (1) présentent des ancrages (respectivement 4, 5 et 6, 7) qui sont raccordés l'un à l'autre de manière à pouvoir pivoter.

8. Dispositif formant aspirateur selon l'une quelconque des revendications 5 et 6, **caractérisé en ce que** le tube d'extension (2) et la section de tube supérieure (1) présentent des ancrages (respectivement 4, 5 et 6, 7) qui sont raccordés l'un à l'autre de manière à pouvoir pivoter par l'intermédiaire de sections formant biellette de liaison (8, 9).

9. Dispositif formant aspirateur selon l'une quelconque des revendications 1 à 8, **caractérisé en ce que** le tuyau (3) est amovible.
